# DEMANDE DE BREVET EUROPEEN

(11) **EP 4 408 036 A1**
(43) Date de publication de la demande: **31.07.2024**
(21) Numéro de dépôt: 23305110.1
(22) Date de dépôt: 27.01.2023
(51) Int. Cl.: H04W 4/06, H04L 12/18, H04L 47/34, H04W 4/30, H04W 84/18

(54) **PROCÉDÉ DE COMMUNICATION DE MESSAGES ENTRE UNE PLURALITÉ D'ÉQUIPEMENTS D'UTILISATEUR**

(71) Demandeur: BULL SAS, 78340 Les Clayes-Sous-Bois (FR)
(72) Inventeur: PIRES, Alexis, 31770 Colomiers (FR); BADET, Mathieu, 31500 Toulouse (FR); BREMEC, Sylvain, 31600 Seysses (FR); SIRE DE VILAR, Arnaud, 31290 Avignonet Lauragais (FR)
(74) Mandataire: Argyma

(57) **Abrégé**

L'invention concerne un procédé de communication de messages entre une pluralité d'équipements d'utilisateur (10) d'un ensemble d'équipements d'utilisateur (10) via un réseau de communication (20), comprenant notamment, lorsqu'un émetteur détermine que le dernier message de données utiles (M1, ..., Mn) d'une série (S) reçu par un récepteur, pour lequel tous les messages de données utiles (M1, ..., Mn) le précédant dans la série (S) ont également été reçus, est différent du dernier message de données utiles (M1, ..., Mn) de la série (S), rediffusion (E8) par l'émetteur du ou des messages de données utiles (M1, ..., Mn) de la série (S) suivant le dernier message de données utiles (M1, ..., Mn) reçu par le récepteur.

## Description

### [Domaine technique]

La présente invention se rapporte au domaine des télécommunications tactiques et concerne plus particulièrement un procédé de communication de messages entre une pluralité d'équipements d'utilisateur via un réseau de communication.

### [État de la technique antérieure]

Les réseaux de télécommunication sans fil de type réseaux radios tactiques sont des réseaux qui présentent plusieurs contraintes. Tout d'abord, pour réaliser la découverte de services, il est nécessaire que chaque équipement d'utilisateur du réseau puisse identifier les autres équipements présents afin de communiquer avec eux. Ensuite, ce type de réseaux, mobiles et décentralisés, impliquent des pertes de paquet, ce qui peut poser des problèmes de fiabilité. Enfin, le fonctionnement en mode point-à-point, dit « unicast », peut ne pas être supporté par certains équipements de télécommunication radios tactiques, ce qui présente un inconvénient.

Les solutions connues peuvent être impossibles à mettre en oeuvre ou présenter une fiabilité des échanges insatisfaisante.

Par exemple, le protocole de contrôle des transmissions ou UDP (User Datagram Protocol en langue anglaise) ne possède aucun mécanisme de réémission, consistant à s'assurer de la réception de chaque paquet et à réémettre tout paquet non reçu, et s'avère donc, de ce fait, insuffisamment fiable. UDP limite en outre la taille de paquets à 64 ko, ce qui peut s'avérer trop peu dans les réseaux de communication radios à haut débit.

Le protocole de contrôle des transmissions fiable ou RUDP (Reliable User Datagram Protocol en langue anglaise) implémente des mécanismes de réémission mais peut générer beaucoup de trafic de paquets car il utilise un mécanisme d'acquittement systématique de la réception des paquets de données, ce qui peut considérablement dégrader la bande passante utile du réseau. De plus, ce protocole ne fonctionne qu'en mode point-à-point.

Le protocole de la couche transport ou QUIC (Quick UDP Internet Protocol en langue anglaise) ne fonctionne qu'en mode point-à-point (unidiffusion ou unicast) dans sa version initiale, et peut de ce fait s'avérer complexe voire impossible à mettre en oeuvre dans un réseau sans fil ad hoc. Ensuite, QUIC peut générer un nombre important d'acquittements et donc d'échanges de paquets sur le réseau, ce qui peut considérablement dégrader la bande passante utile du réseau.

Le protocole de contrôle des transmissions ou TCP (Transmission Control Protocol en langue anglaise) ne fonctionne lui-aussi qu'en mode point-à-point (unidiffusion ou unicast) et utilise également un mécanisme d'acquittement systématique de la réception des paquets de données, ce qui peut considérablement dégrader la bande passante utile du réseau.

Il existe donc un besoin d'une solution simple et efficace permettant de remédier au moins en partie à ces inconvénients.

### [Exposé de l'invention]

L'un des buts de l'invention est de permettre un échange de données simple, fiable et efficace au sein de réseaux fortement contraints tels que des réseaux radios tactiques.

A cette fin, l'invention a tout d'abord pour objet un procédé de communication de messages entre une pluralité d'équipements d'utilisateur d'un ensemble d'équipements d'utilisateur via un réseau de communication, notamment sans fil, de préférence ad hoc fortement contraint, ledit procédé comprenant les étapes de :
- diffusion par chaque équipement d'utilisateur de l'ensemble d'équipements d'utilisateur d'un message de statut indiquant la présence sur le réseau de communication dudit équipement d'utilisateur,
- diffusion par l'un, dit « émetteur », des équipements d'utilisateur de l'ensemble d'équipements d'utilisateur d'une série de messages de données utiles à destination d'au moins un autre équipement d'utilisateur de l'ensemble d'équipements d'utilisateur, chaque message de données utiles de ladite série de messages de données utiles comprenant un identifiant dudit message de données utiles et l'identifiant du message de données utiles précédent de la série, les messages de la série étant classés (et de préférence émis) dans l'ordre de leurs identifiants qui forment ainsi une chaîne d'identifiants, pouvant par exemple être consécutifs,
- réception par les autres équipements d'utilisateur, dits « récepteurs », d'au moins un message de données utiles de la série de messages de données utiles diffusée par l'émetteur,
- détermination, par chaque récepteur, à partir de l'au moins un message de données utiles reçu, de son statut de destinataire ou non de la série de messages de données utiles diffusée,
- pour chaque récepteur ayant déterminé un statut de destinataire de la série de messages de données utiles diffusée, construction, par ledit récepteur, de la chaîne d'identifiants d'au moins une partie de la série de messages de données utiles reçus (d'identifiants consécutifs) à partir de leurs identifiants de message de données utiles et des identifiants de message de données utiles précédents contenus dans chaque message reçu,
- insertion, par chaque récepteur, dans son prochain message de statut à diffuser, du dernier identifiant de la chaîne d'identifiants construite par ledit récepteur, dit « dernier identifiant »,
- réception par l'émetteur du dernier identifiant reçu de chaque récepteur,
- détermination du dernier identifiant le plus faible parmi les derniers identifiants reçus des récepteurs,
- lorsque l'émetteur de la série détermine que le dernier identifiant le plus faible déterminé est différent de l'identifiant du dernier message de données utiles de la série, rediffusion par ledit émetteur du ou des messages de données utiles de la série présentant un identifiant suivant le dernier identifiant le plus faible déterminé dans la chaîne d'identifiants.

Ainsi, l'émetteur collecte le message de statut envoyé par chaque récepteur, compare les derniers identifiants de chaîne, garde le plus faible (donc celui du récepteur qui a reçu le moins de messages) et rediffuse (à tous les récepteurs) les messages non reçus par ce plus mauvais récepteur. Il y a donc une seule rediffusion pour tous les récepteurs.

Le procédé selon l'invention permet à la fois les échanges de données, en particulier au sein de réseaux fortement contraints, tels que les réseaux ad hoc fortement contraints, tout en assurant une haute fiabilité (peu de perte de paquets) et en évitant de dégrader significativement la bande passante, limitant ainsi les pertes de données. Par les termes « présence d'un équipement d'utilisateur sur le réseau de communication », on entend que l'équipement d'utilisateur est connecté au réseau de sorte à pouvoir recevoir les messages envoyés par les autres équipements d'utilisateur de l'ensemble d'équipements d'utilisateur. En effet, un équipement d'utilisateur peut être connecté au réseau sans pour autant pouvoir recevoir les messages, par exemple car il est trop loin des autres équipements d'utilisateur.

Avantageusement, chaque message de données utiles de la série de message de données utiles comprend l'identifiant d'un ou de plusieurs destinataires.

Avantageusement encore, la taille d'un ensemble de données utiles destinées à être insérées dans un message de données utiles étant supérieure à la taille maximale du champ de données utiles dudit message de données utiles, le procédé comprend une étape de segmentation de l'ensemble de données utiles afin de répartir lesdites données utiles dans une série de messages de données utiles dont les identifiants sont ordonnés dans un ordre croissant afin de permettre à un récepteur de reconstruire entièrement ladite série de messages de données utiles. Ainsi, les messages de taille importante sont segmentés afin de respecter les contraintes de la couche de liaison.

De préférence, les identifiants des messages de données utiles consécutifs d'une série sont consécutifs.

L'invention concerne également un produit programme d'ordinateur caractérisé en ce qu'il comporte un ensemble d'instructions de code de programme qui, lorsqu'elles sont exécutées par un ou plusieurs processeurs, configurent le ou les processeurs pour mettre en oeuvre un procédé tel que présenté précédemment.

L'invention concerne également un équipement d'utilisateur émetteur pour la communication de messages entre une pluralité d'équipements d'utilisateur d'un ensemble d'équipements d'utilisateur via un réseau de communication, ledit équipement d'utilisateur émetteur étant configuré pour :
- diffuser une série de messages de données utiles à destination d'au moins un autre équipement d'utilisateur récepteurs de l'ensemble d'équipements d'utilisateur, chaque message de données utiles de ladite série de message de données utiles comprenant un identifiant dudit message de données utiles et l'identifiant du message de données utiles précédent de la série, les messages de la série étant classés dans l'ordre de leurs identifiants qui forment ainsi une chaîne d'identifiants,
- recevoir un dernier identifiant envoyé par chaque récepteur,
- déterminer le dernier identifiant le plus faible parmi les derniers identifiants reçus des autres équipements d'utilisateur,
- lorsque l'équipement d'utilisateur détermine que le dernier identifiant le plus faible déterminé est différent de l'identifiant du dernier message de données utiles de la série, rediffuser le ou les messages de données utiles de la série présentant un identifiant suivant le dernier identifiant le plus faible déterminé dans la chaîne d'identifiants.

De préférence, l'équipement d'utilisateur émetteur est configuré pour diffuser un message de statut indiquant la présence sur le réseau de communication dudit équipement d'utilisateur.

De préférence encore, l'équipement d'utilisateur est configuré pour insérer l'identifiant d'un ou de plusieurs destinataires dans chaque message de données utiles de la série de message de données utiles.

De préférence encore, l'équipement d'utilisateur émetteur est configuré pour, la taille d'un ensemble de données utiles destinées à être insérées dans un message de données utiles étant supérieure à la taille maximale du champ de données utiles dudit message de données utiles, segmenter l'ensemble de données utiles afin de répartir lesdites données utiles dans une série de messages de données utiles dont les identifiants sont ordonnés dans un ordre croissant afin de permettre à un récepteur de reconstruire entièrement ladite série de messages de données utiles.

Dans une forme de réalisation, l'équipement d'utilisateur émetteur est configuré pour insérer des identifiants consécutifs dans les messages consécutifs d'une même série, par exemple par incrément de 1.

L'invention concerne également un équipement d'utilisateur récepteur pour la communication de messages entre une pluralité d'équipements d'utilisateur d'un ensemble d'équipements d'utilisateur via un réseau de communication, ledit équipement d'utilisateur récepteur étant configuré pour :
- recevoir au moins un message de données utiles d'une série de messages de données utiles diffusée par un équipement d'utilisateur émetteur de l'ensemble d'équipements d'utilisateur,
- déterminer, à partir d'un message de données utiles reçu, son statut de destinataire ou non d'une série de messages de données utiles diffusée,
- lorsque ledit équipement d'utilisateur récepteur a déterminé un statut de destinataire de la série de messages de données utiles envoyés, construire la chaîne d'identifiants d'au moins une partie de la série de messages de données utiles d'identifiants consécutifs reçus à partir de leurs identifiants de message de données utiles et des identifiants de message de données utiles précédents contenus dans chaque message de données utiles reçu,
- insérer dans son prochain message de statut à diffuser l'identifiant du dernier message de données utiles reçu.

L'invention concerne également un équipement d'utilisateur étant à la fois émetteur, comme présenté précédemment, et récepteur, comme présenté ci-avant.

De préférence, l'équipement d'utilisateur est configuré pour diffuser un message de statut indiquant la présence dudit équipement d'utilisateur sur le réseau de communication.

L'invention concerne également un système de communication comprenant une pluralité d'équipements d'utilisateur tels que présentés précédemment et un réseau de communication, de préférence radio tactique ou réseau sans fil ad hoc ou réseau MANET, configuré pour permettre la communication entre lesdits équipements d'utilisateur.

### [Description des dessins]

D'autres caractéristiques et avantages de l'invention apparaîtront encore à la lecture de la description qui va suivre. Celle-ci est purement illustrative et doit être lue en regard des dessins annexés sur lesquels :
La figure 1 illustre schématiquement une forme de réalisation du système selon l'invention.
La figure 2 illustre schématiquement un mode de réalisation du procédé selon l'invention.

### [Description des modes de réalisation]

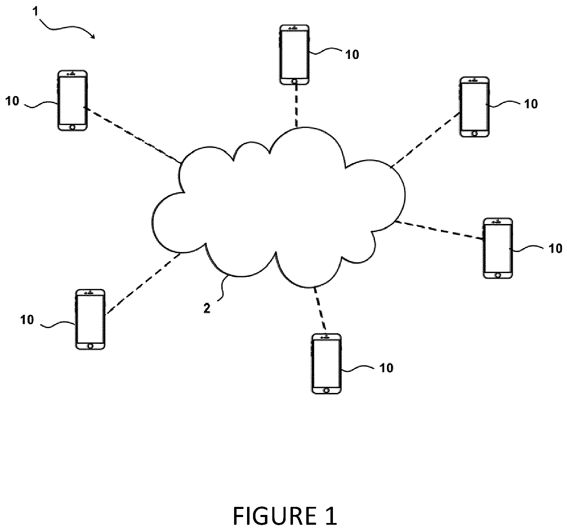

La figure 1 illustre un exemple de système 1 selon l'invention.

### Système 1

Le système 1 comprend un ensemble d'équipements d'utilisateur 10 et un réseau de communication 20.

### Équipement d'utilisateur 10

Chaque équipement d'utilisateur 10 est configuré pour fonctionner à la fois en émission et en réception (i.e. peut fonctionner en émetteur et/ou en récepteur). Chaque équipement d'utilisateur 10 est caractérisé par un identifiant unique dans le système 1.

Chaque équipement d'utilisateur 10 est configuré pour émettre deux types de messages : des messages dits « de statut » et des messages dits « de données utiles ». Chaque message comprend des données qui sont codées dans un signal émis par l'équipement d'utilisateur 10 émetteur, de manière connue en soi. Ainsi, chaque équipement d'utilisateur 10 est configuré pour coder les données à envoyer dans un signal et pour envoyer ledit signal aux équipements d'utilisateur 10 récepteurs via le réseau de communication 20. De même, chaque équipement d'utilisateur 10 récepteur est configuré pour recevoir les signaux émis par les autres équipements d'utilisateur 10 et pour décoder lesdits signaux afin de déterminer les messages codés dans lesdits signaux. Il est à noter qu'un équipement d'utilisateur émetteur (diffuseur) d'une série de messages de données utiles dans une première séquence peut être récepteur d'une série de messages de données utiles dans une deuxième séquence, et vice-versa.

Les messages de données utiles sont envoyés sous la forme d'une série de messages. Une série de messages comporte au moins un message de données utiles. Chaque message de données utiles de la série comprend un identifiant dudit message, des données utiles destinées à un ou plusieurs des autres équipements d'utilisateur 10 de l'ensemble d'équipement d'utilisateur 10, par exemple les données d'une application (ou données applicatives), et le ou les identifiants des équipements d'utilisateur 10 destinataires de la série de messages de données utiles. Chaque message de données utiles comprend également l'identifiant du message de données utiles le précédant dans la série, lorsque cela est possible, c'est-à-dire à partir du deuxième message de la série.

Chaque équipement d'utilisateur 10 est configuré pour diffuser une série de messages de données utiles à chaque fois que ces données utiles doivent être envoyées à un, plusieurs, voire tous les équipements d'utilisateur 10 de l'ensemble d'équipement d'utilisateur 10. Les messages sont diffusés à tous les équipements d'utilisateur 10 mais peuvent n'avoir que l'un ou certains d'entre eux comme destinataires.

À cette fin, chaque équipement d'utilisateur 10 est configuré pour insérer dans chaque message de données utiles de la série, un identifiant dudit message, le ou les identifiants des équipements d'utilisateur 10 destinataires et, à partir du deuxième message de la série, l'identifiant du message qui le précédait immédiatement dans la série. Par exemple, pour une série de trois messages dont les identifiants sont 001, 010 et 011, le premier message comprend l'identifiant 001, les adresses du ou des destinataires et ses données utiles, le deuxième message comprend l'identifiant 010, l'identifiant 001, les adresses du ou des destinataires et ses données utiles et le troisième message comprend l'identifiant 011, l'identifiant 010, les adresses du ou des destinataires et ses données utiles.

Un message de statut comprend l'identifiant de l'équipement d'utilisateur 10 qui émet ledit message de statut afin de permettre aux autres équipements d'utilisateur 10 de savoir que ledit équipement d'utilisateur 10 émetteur du message de statut est présent sur le réseau de communication 20 afin de recevoir des messages. Un message de statut comprend, le cas échéant et pour chacun des participants au réseau, l'identifiant du dernier message de données utiles reçu pour lequel tous les messages de données utiles le précédant dans la série ont également été reçus. Chaque équipement d'utilisateur 10 est configuré pour diffuser, c'est à dire émettre périodiquement, un message de statut lorsque ledit équipement d'utilisateur 10 est présent sur le réseau de communication 20.

Chaque équipement d'utilisateur 10 est configuré pour déterminer, à partir d'au moins un message de données utiles reçu, si ledit équipement d'utilisateur 10 est destinataire ou non de la série de messages diffusée.

Chaque équipement d'utilisateur 10 destinataire d'une série de messages de données utiles est configuré pour construire la chaîne d'identifiants d'au moins une partie de la série de messages de données utiles d'identifiants consécutifs reçus à partir de leurs identifiants de message et des identifiants de message précédent contenus dans chaque message de données utiles reçu. Par exemple, pour une série de quatre messages dont les identifiants sont 001, 010, 011 et 100, si l'équipement d'utilisateur 10 destinataire de la série a reçu le premier, le deuxième et le quatrième message de la série, la chaîne d'identifiants construite sera 001 - 010 puisque l'identifiant 100 du quatrième message n'est pas consécutif de l'identifiant 010 du deuxième message dans la chaîne d'identifiants.

Chaque équipement d'utilisateur 10 destinataire d'une série de messages de données utiles participant au réseau est configuré pour insérer dans son prochain message de statut MS à émettre, le dernier identifiant de la chaîne d'identifiants construite. Dans l'exemple du paragraphe précédent, le dernier identifiant inséré par l'équipement d'utilisateur 10 dans son prochain message de statut MS est donc celui du deuxième message 010.

Un équipement d'utilisateur 10 émetteur est configuré pour recevoir le dernier identifiant envoyé par chaque équipement d'utilisateur 10 récepteur.

Un équipement d'utilisateur 10 émetteur est configuré pour déterminer le dernier identifiant le plus faible parmi les derniers identifiants reçus des équipements d'utilisateur 10 récepteurs.

Lorsqu'un équipement d'utilisateur 10 émetteur a déterminé que le dernier identifiant le plus faible déterminé est différent de l'identifiant du dernier message de données utiles M1, ..., Mn de la série S, ledit équipement d'utilisateur 10 émetteur est configuré pour rediffuser le ou les messages de données utiles M1, ..., Mn de la série S présentant un identifiant suivant dans la chaîne d'identifiants, le dernier identifiant le plus faible déterminé. Autrement dit, lorsque l'émetteur détecte qu'un récepteur n'est pas à jour des messages envoyés, il rediffuse les messages de données utiles manquants. Ainsi, l'émetteur collecte le message de statut envoyé par chaque récepteur, compare les derniers identifiants de chaîne, garde le plus faible (donc celui du récepteur qui a reçu le moins de messages) et rediffuse (à tous les récepteurs) les messages non reçus par ce plus mauvais récepteur. Il y a donc une seule rediffusion pour tous les récepteurs.

Si un équipement d'utilisateur 10 destinataire n'a reçu aucun message de données utiles M1, ..., Mn de la série S, son message de statut MS ne contient alors aucun identifiant. Dans ce cas, l'équipement d'utilisateur 10 émetteur considère que le dernier identifiant est nul et rediffuse l'ensemble des messages de données utiles M1, ..., Mn de la série S ou éventuellement les N derniers messages de données utiles de la série S, N étant prédéfini.

Chaque équipement d'utilisateur 10 comprend un processeur apte à mettre en oeuvre un ensemble d'instructions permettant de réaliser ces fonctions.

### Exemple de mise en oeuvre

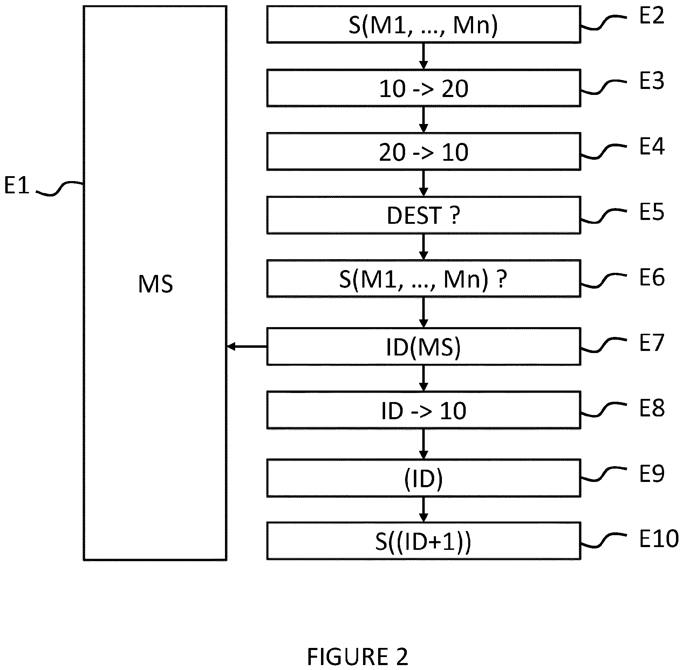

Un exemple de mode de réalisation du procédé selon l'invention va maintenant être décrit en référence à la figure 2.

De manière permanente, dans une étape E1, chaque équipement d'utilisateur 10 de l'ensemble d'équipements d'utilisateur 10 diffuse un message de statut MS indiquant sa présence sur le réseau de communication 20. En pratique, une telle diffusion se traduit par une émission périodique du message de statut MS, le contenu de ce dernier comprenant a minima l'identifiant de l'équipement d'utilisateur 10 qui l'émet et pouvant varier d'une émission à une autre, en comprenant par exemple, outre l'identifiant de l'équipement d'utilisateur 10 qui l'émet, pour une série S de messages de données utiles dont il est le destinataire, le dernier identifiant d'une chaîne d'identifiants construite à partir des identifiants contenus dans les messages de données utiles de la série S qu'il a reçus.

Lorsque l'un des équipements d'utilisateur 10 a besoin d'émettre une série S de messages de données utiles M1, ..., Mn, par exemple liés à une application, à destination d'un ou de plusieurs des autres équipements d'utilisateur 10 de l'ensemble d'équipements d'utilisateur 10, voire à tous les autres équipements d'utilisateur 10 de l'ensemble d'équipements d'utilisateur 10, ledit équipement d'utilisateur 10, désigné « émetteur », génère la série S de message de données utiles M1, ..., Mn à envoyer dans une étape E2.

Cette étape E2 comprend par exemple si nécessaire la segmentation de l'ensemble des données utiles à envoyer en plusieurs sous-ensembles, chaque sous-ensemble étant envoyé dans un message de données utiles de la série dans l'ordre de segmentation de l'ensemble des données utiles.

L'étape E2 comprend ensuite l'insertion de chaque sous-ensemble dans un message de données utiles différent de la série, l'attribution d'un identifiant à chaque message de données utiles M1, ..., Mn et l'insertion de l'identifiant du message de données utiles M1, ..., Mn précédent de la série S, à partir du deuxième message de données utiles M1, ..., Mn et jusqu'au dernier de la série S.

L'équipement d'utilisateur 10 émetteur envoie chaque message de données utiles M1, ..., Mn de la série S, à tour de rôle dans l'ordre de ladite série S, via le réseau de communication 20 dans une étape E3. Les messages de données utiles M1, ..., Mn de la série S peuvent être envoyés au fur et à mesure qu'ils sont générés, un à un ou bien la série S peut d'abord être générée puis envoyée en une salve, de préférence dans l'ordre des messages de données utiles M1, ..., Mn de la série S.

Les messages de données utiles M1, ..., Mn envoyés par l'équipement d'utilisateur 10 émetteur sont reçus par certains ou tous les autres équipements d'utilisateur 10, dits « récepteurs » dans une étape E4. Tout ou partie des messages de données utiles M1, ..., Mn envoyés par l'équipement d'utilisateur 10 émetteur peuvent ne pas être reçus par certains des équipements d'utilisateur 10 récepteurs, par exemple si le réseau présente des problèmes de transmission ou si les récepteurs sont trop loin de l'émetteur.

A réception d'un message de données utiles M1, ..., Mn par un équipement d'utilisateur 10 récepteur, ledit équipement d'utilisateur 10 récepteur analyse dans une étape E5 le message de données utiles M1, ..., Mn afin de déterminer si ledit message de données utiles M1, ..., Mn comporte un identifiant de destinataire DEST correspondant à son propre identifiant (i.e. son identifiant unique avec lequel il indique qu'il est présent sur le réseau de communication 20 dans ses messages de statut MS).

En l'absence d'identifiant de destinataire DEST dans le message reçu, le récepteur en déduit que le message reçu est destiné à tous les équipements d'utilisateur 10 de l'ensemble d'équipements d'utilisateur 10.

Chaque récepteur ayant déterminé qu'il est destinataire de la série de messages en cours d'émission, essaye dans une étape E6 de reconstruire la chaîne des identifiants des messages de données utiles M1, ..., Mn de la série S à partir des identifiants ID des messages de données utiles M1, ..., Mn reçus et des identifiants ID de message précédent contenus dans chaque message de données utiles M2, ..., Mn reçu.

Chaque équipement d'utilisateur 10 récepteur insère dans une étape E7 le dernier identifiant ID de la chaîne d'identifiants ID construite, appelé « dernier identifiant », dans son prochain message de statut MS et émet ledit message de statut MS au moment prédéfini pour sa diffusion.

L'émetteur reçoit alors dans une étape E8 le dernier identifiant ID de la chaîne d'identifiants ID envoyé par chaque récepteur. Ainsi, sous réserve de la bonne réception des messages de statut envoyés par chacun des équipements d'utilisateur 10 récepteurs, l'émetteur a connaissance du dernier message de données utiles reçu par chacun des récepteurs ayant reçu des messages de données utiles M1, ..., Mn.

L'émetteur détermine alors dans une étape E9 l'identifiant ID le plus faible parmi les derniers identifiants ID reçus des récepteurs.

Ensuite, lorsque l'émetteur détermine que le dernier identifiant ID le plus faible déterminé est différent de l'identifiant ID du dernier message de données utiles M1, ..., Mn de la série S qu'il a diffusée, ledit émetteur rediffuse dans une étape E10 le ou les messages de données utiles M1, ..., Mn de la série S présentant un identifiant ID suivant le dernier identifiant ID le plus faible déterminé, c'est-à-dire qu'il rediffuse les messages à partir du message suivant le message ayant l'identifiant ID le plus faible reçu par les récepteurs.

L'exemple ci-avant a été décrit à des fins de clarté avec un seul émetteur, les autres équipements d'utilisateur 10 étant récepteurs, mais il est à noter que plusieurs émetteurs peuvent envoyer des messages de données utiles simultanément et qu'un émetteur peut ainsi également être récepteur de messages de données utiles envoyés par un autre émetteur de l'ensemble d'équipements d'utilisateur 10.

L'invention permet de s'assurer que l'ensemble des messages de données utiles d'une série de messages de données utiles envoyés par un émetteur est bien reçu par le ou les destinataires de ladite série de messages de données utiles.

## Revendications

1. Procédé de communication de messages entre une pluralité d'équipements d'utilisateur (10) d'un ensemble d'équipements d'utilisateur (10), via un réseau de communication (20), ledit procédé comprenant les étapes de :
- diffusion (E1) par chaque équipement d'utilisateur (10) de l'ensemble d'équipements d'utilisateur (10) d'un message de statut (MS) indiquant la présence dudit équipement d'utilisateur (10) sur le réseau de communication (20),
- diffusion (E3) par l'un, dit « émetteur », des équipements d'utilisateur (10) de l'ensemble d'équipements d'utilisateur (10) d'une série (S) de messages de données utiles (M1, ..., Mn) à destination d'au moins un autre équipement d'utilisateur (10) de l'ensemble d'équipements d'utilisateur (10), chaque message de données utiles (M1, ..., Mn) de ladite série (S) de message de données utiles (M1, ..., Mn) comprenant un identifiant dudit message de données utiles (M1, ..., Mn) et l'identifiant du message de données utiles (M1, ..., Mn) précédent de la série, les messages (M1, ..., Mn) de la série (S) étant classés dans l'ordre de leurs identifiants qui forment ainsi une chaîne d'identifiants,
- réception (E4) par les autres équipements d'utilisateur (10), dits « récepteurs », d'au moins un message de données utiles (M1, ..., Mn) de la série (S) de messages de données utiles (M1, ..., Mn) diffusée par l'émetteur,
- détermination (E5), par chaque récepteur, à partir de l'au moins un message de données utiles (M1, ..., Mn) reçu, de son statut de destinataire (DEST) ou non de la série de messages de données utiles (M1, ..., Mn) envoyés,
- pour chaque récepteur ayant déterminé un statut de destinataire (DEST) de la série (S) de messages de données utiles (M1, ..., Mn) envoyés, construction (E6), par ledit récepteur, d'au moins une partie de la chaîne d'identifiants de la série (S) de messages de données utiles (M1, ..., Mn) reçus à partir de leurs identifiants de message de données utiles (M1, ..., Mn) et des identifiants de message de données utiles (M1, ..., Mn) précédents contenus dans chaque message reçu,
- insertion (E7), par chaque récepteur, dans son prochain message de statut (MS) à diffuser, du dernier identifiant (ID) de la chaîne d'identifiants (ID) construite par ledit récepteur, dit « dernier identifiant (ID) »,
- réception (E8) par l'émetteur du dernier identifiant (ID) reçu de chaque récepteur,
- détermination (E9) du dernier identifiant (ID) le plus faible parmi les derniers identifiants (ID) reçus des récepteurs,
- lorsque l'émetteur de la série (S) détermine que le dernier identifiant (ID) le plus faible déterminé est différent de l'identifiant (ID) du dernier message de données utiles (M1, ..., Mn) de la série (S), rediffusion (E10) par ledit émetteur du ou des messages de données utiles (M1, ..., Mn) de la série (S) présentant un identifiant (ID) suivant le dernier identifiant (ID) le plus faible déterminé dans la chaîne d'identifiants (ID).

2. Procédé selon la revendication 1, dans lequel chaque message de données utiles (M1, ..., Mn) de la série (S) de message de données utiles (M1, ..., Mn) comprend l'identifiant (ID) d'un ou de plusieurs destinataires (DEST).

3. Procédé selon l'une quelconque des revendications précédentes, comprenant, la taille d'un ensemble de données utiles destinées à être insérées dans un message de données utiles (M1, ..., Mn) étant supérieure à la taille maximale du champ de données utiles dudit message de données utiles (M1, ..., Mn), une étape de segmentation de l'ensemble de données utiles afin de répartir lesdites données utiles dans une série (S) de messages de données utiles (M1, ..., Mn) dont les identifiants sont ordonnés dans un ordre croissant afin de permettre à un récepteur de reconstruire entièrement ladite série (S) de messages de données utiles (M1, ..., Mn).

4. Procédé selon l'une quelconque des revendications précédentes, dans lequel les identifiants des messages de données utiles (M1, ..., Mn) consécutifs d'une série (S) sont consécutifs.

5. Produit programme d'ordinateur **caractérisé en ce qu'**il comporte un ensemble d'instructions de code de programme qui, lorsqu'elles sont exécutées par un ou plusieurs processeurs, configurent le ou les processeurs pour mettre en oeuvre un procédé selon l'une quelconque des revendications précédentes.

6. Équipement d'utilisateur (10) émetteur pour la communication de messages entre une pluralité d'équipements d'utilisateur (10) d'un ensemble d'équipements d'utilisateur (10) via un réseau de communication (20), ledit équipement d'utilisateur (10) étant configuré pour :
- diffuser une série (S) de messages de données utiles (M1, ..., Mn) à destination d'au moins autre équipement d'utilisateur (10) de l'ensemble d'équipements d'utilisateur (10), chaque message de données utiles (M1, ..., Mn) de ladite série (S) de message de données utiles (M1, ..., Mn) comprenant un identifiant dudit message de données utiles (M1, ..., Mn) et l'identifiant du message de données utiles (M1, ..., Mn) précédent de la série (S), les messages (M1, ..., Mn) de la série (S) étant classés dans l'ordre de leurs identifiants qui forment ainsi une chaîne d'identifiants,
- recevoir un dernier identifiant (ID) envoyé par chaque récepteur,
- déterminer le dernier identifiant (ID) le plus faible parmi les derniers identifiants (ID) reçus des autres équipements d'utilisateur (10),
- lorsque l'équipement d'utilisateur (10) détermine que le dernier identifiant (ID) le plus faible déterminé est différent de l'identifiant (ID) du dernier message de données utiles (M1, ..., Mn) de la série (S), rediffuser le ou les messages de données utiles (M1, ..., Mn) de la série (S) présentant un identifiant (ID) suivant le dernier identifiant (ID) le plus faible déterminé dans la chaîne d'identifiants (ID).

7. Équipement d'utilisateur (10) selon la revendication précédente, ledit équipement d'utilisateur (10) étant configuré pour insérer l'identifiant d'un ou de plusieurs destinataires (DEST) dans chaque message de données utiles (M1, ..., Mn) de la série (S) de message de données utiles (M1, ..., Mn).

8. Équipement d'utilisateur (10) selon l'une quelconque des revendications 6 ou 7, ledit équipement d'utilisateur (10) étant configuré pour, la taille d'un ensemble de données utiles destinées à être insérées dans un message de données utiles (M1, ..., Mn) étant supérieure à la taille maximale du champ de données utiles dudit message de données utiles (M1, ..., Mn), segmenter l'ensemble de données utiles afin de répartir lesdites données utiles dans une série (S) de messages de données utiles (M1, ..., Mn) dont les identifiants (ID) sont ordonnés dans un ordre croissant afin de permettre à un récepteur de reconstruire entièrement ladite série (S) de messages de données utiles (M1, ..., Mn).

9. Équipement d'utilisateur (10) selon l'une quelconque des revendications 6 à 8, ledit équipement d'utilisateur (10) étant configuré pour insérer des identifiants (ID) consécutifs dans les messages consécutifs d'une même série (S).

10. Équipement d'utilisateur (10) récepteur pour la communication de messages entre une pluralité d'équipements d'utilisateur (10) d'un ensemble d'équipements d'utilisateur (10) via un réseau de communication (20), ledit équipement d'utilisateur (10) étant configuré pour :
- recevoir au moins un message de données utiles (M1, ..., Mn) d'une série (S) de messages de données utiles (M1, ..., Mn) diffusée par un équipement d'utilisateur (10) émetteur de l'ensemble d'équipements d'utilisateur (10),
- déterminer, à partir d'un message de données utiles (M1, ..., Mn) reçu, son statut de destinataire (DEST) ou non d'une série (S) de messages de données utiles (M1, ..., Mn) diffusée,
- lorsque ledit équipement d'utilisateur (10) a déterminé un statut de destinataire (DEST) de la série (S) de messages de données utiles (M1, ..., Mn) diffusée, construire la chaîne d'identifiants (ID) d'au moins une partie de la série (S) de messages de données utiles (M1, ..., Mn) d'identifiants (ID) consécutifs reçus à partir de leurs identifiants (ID) de message de données utiles (M1, ..., Mn) et des identifiants (ID) de message de données utiles (M1, ..., Mn) précédents contenus dans chaque message de données utiles (M1, ..., Mn) reçu,
- insérer dans son prochain message de statut (MS) à diffuser l'identifiant (ID) du dernier message de données utiles (M1, ..., Mn) reçu.

11. Équipement d'utilisateur (10) selon l'une quelconque des revendications 6 à 10, ledit équipement d'utilisateur (10) étant configuré pour diffuser un message de statut (MS) indiquant la présence dudit équipement d'utilisateur (10) sur le réseau de communication (20).

12. Système (1) de communication comprenant une pluralité d'équipements d'utilisateur (10) selon l'une quelconque des revendications 6 à 11 et un réseau de communication (20), de préférence radio, configuré pour permettre la communication entre lesdits équipements d'utilisateur (10).
